# EUROPEAN PATENT APPLICATION

(11) **EP 3 611 345 A1**
(43) Date of publication of application: **19.02.2020**
(21) Application number: 19186326.5
(22) Date of filing: 15.07.2019
(51) Int. Cl.: F01D 5/30, F01D 11/00, F01D 5/32

(54) **WINDAGE SHIELD, CORRESPONDING FAN AND GAS TURBINE ENGINE**

(30) Priority: 14.08.2018 GB 201813236
(71) Applicant: Rolls-Royce plc, London SW1E 6AT (GB)
(72) Inventor: Breen, Clive, Derby, Derbyshire DE24 8BJ (GB)
(74) Representative: Rolls-Royce plc

(57) **Abstract**

A windage shield (200', 200") for mounting on a fan disc (100', 100") of a fan (23) of a gas turbine engine (10), the windage shield (200', 200") comprising: a fan disc contacting portion (215', 215") adapted to contact and structurally support a rear portion of the fan disc (100', 100"); wherein the fan disc contacting portion (215', 215") includes one or more stiffening elements (205', 205") to locally increase the hoop stiffness of the windage shield (200', 200").

## Description

The present disclosure relates to a windage shield for mounting on a rotor disc of a fan for a gas turbine engine, a fan for a gas turbine engine and a gas turbine engine.

Gas turbine engines include a fan at the front of the engine. The fan comprises a plurality of radially extending blades mounted on a rotor disc which rotates about an axis. The fan is used as a first compression stage for air passed to a combustor, and to direct air passing through a by-pass to provide thrust. Further compression stages for the air provided to the combustor may also use rotating compressors, having a plurality of blades extending from a hub.

Rotation of a fan causes a pressure differential to be generated in a space between an annulus filler and the rotor disc, with higher pressure air located at the position radially furthest form the axis of rotation, and lower pressure air located at the position radially closest to the axis of rotation. Depending on the specific configuration of adjacent hardware in the engine, the air behind the fan may be stationary and so may have a lower pressure than the air under the annulus filler. At a radially outward position, the higher pressure air moves from under the annulus filler, into the low pressure region rearwards of the annulus filler. To replace this air, new air is drawn into the area under the annulus filler, at a radially inward region. This sets up a recirculation which can reduce engine efficiency.

To prevent recirculation, it is known to provide a radially extending shield, known as a windage shield. The windage shield is mounted on and extends from the rotor disc, and is disposed behind the rotor disc and the annulus filler. The windage shield may also include a lid that helps form a smooth inner radial airflow surface and retain the annulus filler against radial (centrifugal) forces.

According to a first aspect there is provided a windage shield for mounting on a fan disc of a fan of a gas turbine engine, the windage shield comprising: a fan disc contacting portion adapted to contact and structurally support a rear portion of the fan disc; wherein the fan disc contacting portion includes one or more stiffening elements to locally increase the hoop stiffness of the windage shield.

The fan disc contacting portion including one or more stiffening elements to locally increase the hoop stiffness of the windage shield may allow the windage shield to mitigate some of the loads and displacements experienced by the rear portion of the fan disc as well as improve engine efficiency by reducing or preventing recirculation of air between the area under the annulus filler and the air behind the fan. By structurally supporting the rear portion of the fan disc, a windage shield in accordance with the present disclosure may also, or additionally, reduce or prevent the need for potentially complex changes in the design and/or manufacturing process of the fan disc or other components in a fan disc assembly.

At least one of the one or more stiffening elements may protrude axially forward and/or rearward from, and/or radially inwardly and/or outwardly across the fan disc contacting portion.

At least one of the one or more stiffening elements may be integral to the fan disc contacting portion. Additionally or alternatively, at least one of the one or more stiffening elements may be fixedly or removably attached to the fan disc contacting portion. Additionally or alternatively, at least one of the one or more stiffening elements may be provided as an insert receivable partially or fully on or in the fan disc contacting portion.

At least one of the one or more stiffening elements may comprise, or consist essentially of, the same material or materials as the fan disc contacting portion. At least one of the one or more stiffening elements may comprise, or consist essentially of, a different material or materials from the fan disc contacting portion.

At least one of the one or more stiffening elements may comprise, or consist essentially of, a composite material. The composite material may be a metal matrix composite (MMC) material or a ceramic matrix composite (CMC) material.

At least one of the one or more stiffening elements may comprise, or consist essentially of, a metal or an alloy. Suitable metals or alloys may include a nickel alloy, titanium, a titanium alloy, aluminium or an aluminium alloy.

At least one of the one or more stiffening elements may comprise, or consist essentially of, a polymeric material or a ceramic material.

A second aspect provides a fan for a gas turbine engine, the fan comprising a fan disc, and at least one windage shield according to the first aspect mounted on the fan disc.

The fan disc contacting portion including one or more stiffening elements to locally increase the hoop stiffness of the windage shield may allow the windage shield to mitigate some of the loads and displacements experienced by the rear portion of the fan disc as well as improve engine efficiency by reducing or preventing recirculation of air between the area under the annulus filler and the air behind the fan. Providing a fan comprising a fan disc with at least one windage shield in accordance with the present disclosure mounted on the fan disc may also, or additionally, reduce or prevent the need for potentially complex changes in the design and/or manufacturing process of the fan disc or other components in a fan disc assembly, since the fan disc contacting portion structurally supports a rear portion of the fan disc.

The fan disc may comprise one or more disc posts for locating a fan blade mounted on the fan disc. At least one of the one or more stiffening elements may be located on the disc post(s), e.g. at least partially radially outwardly of the disc posts.

The fan disc may comprise a protrusion extending axially rearwardly. At least one of the one or more stiffening elements may be disposed on and/or adjacent to the protrusion.

A third aspect provides a gas turbine engine for an aircraft comprising: an engine core comprising a turbine, a compressor and a core shaft connecting the turbine to the compressor; and a fan according to the second aspect located upstream of the engine core.

The fan may comprise a fan disc and a plurality of fan blades mounted on the fan disc.

The fan may comprise a plurality of annulus fillers mounted on the fan disc, each of the annulus fillers being mounted between a pair of adjacent fan blades.

A windage shield according to the first aspect may be mounted on the fan disc adjacent one or more of, e.g. each of, the annulus fillers.

The gas turbine engine may further comprise a gearbox that receives an input from the core shaft and outputs drive to the fan so as to drive the fan at a lower rotational speed than the core shaft.

The turbine may be a first turbine, the compressor may be a first compressor and the core shaft may be a first core shaft. The engine core may further comprise a second turbine, a second compressor and a second core shaft connecting the second turbine to the second compressor. The second turbine, the second compressor and the second core shaft may be arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of descent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a cross-sectional view of a fan for a gas turbine engine comprising a windage shield;
**Figure 5** shows a cross-sectional perspective view of an example of a windage shield mounted on a fan disc;
**Figure 6** is a close up view of the windage shield shown in Figure 5; and
**Figure 7** is a close up cross-sectional perspective view of another example of a windage shield mounted on a fan disc.

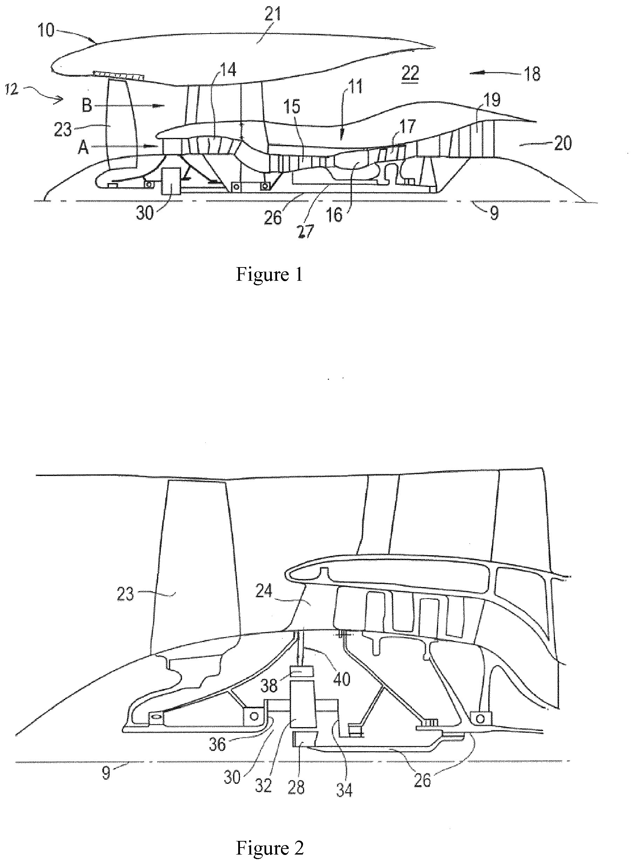

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

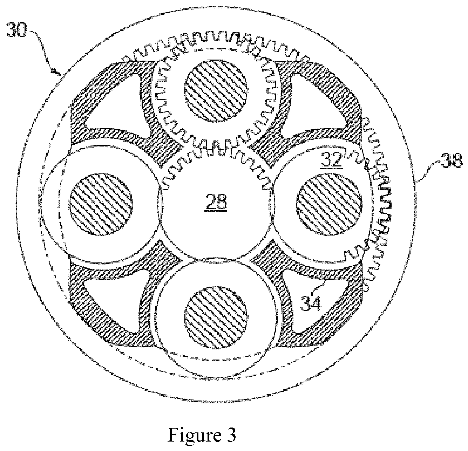

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

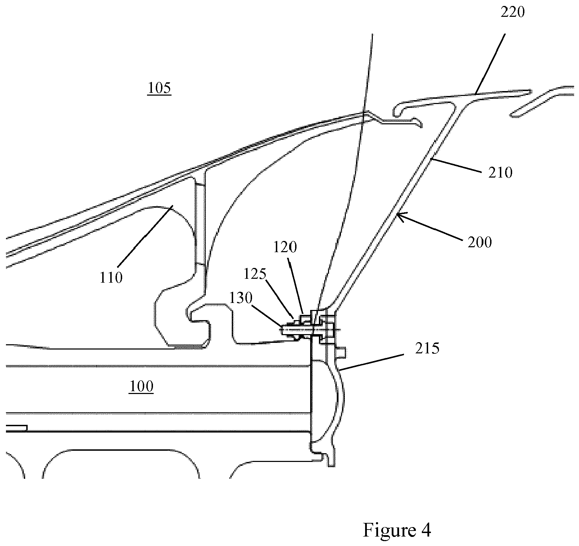

Figure 4 shows a conventional arrangement of a windage shield 200 mounted on a fan disc 100 of a gas turbine engine 10. Also shown mounted on the fan disc 100 is a fan blade 105, and an annulus filler 110. The fan disc 100 comprises disc posts 120 which serve to act as a locating mechanism for the fan blade 105 when the fan blade 105 is mounted on the fan disc 100. The windage shield 200 is located adjacent the annulus filler 110 (axially rearwards of the annulus filler 110).

The windage shield 200 comprises a fan disc contacting portion 215, a shield portion 210 and a lid 220. The windage shield 200 is mounted on the fan disc 100 via the disc posts 120. The fan disc contacting portion 215 of the windage shield 200 is connected to the disc posts 120 using a nut 125 and a bolt 130. A head of the bolt 130 is countersunk into a rear surface of the fan disc contacting portion 215. The shield portion 210 extends radially outwardly from the fan disc contacting portion 215 and axially rearwardly from the fan disc contacting portion 215. The shield portion 210 extends between the fan disc contacting portion 215 and the lid 220. This arrangement is designed to prevent recirculation of air between a region of air beneath each annulus filler 110 and a region of lower pressure air rearwards of each annulus filler 110, which can act to reduce engine efficiency.

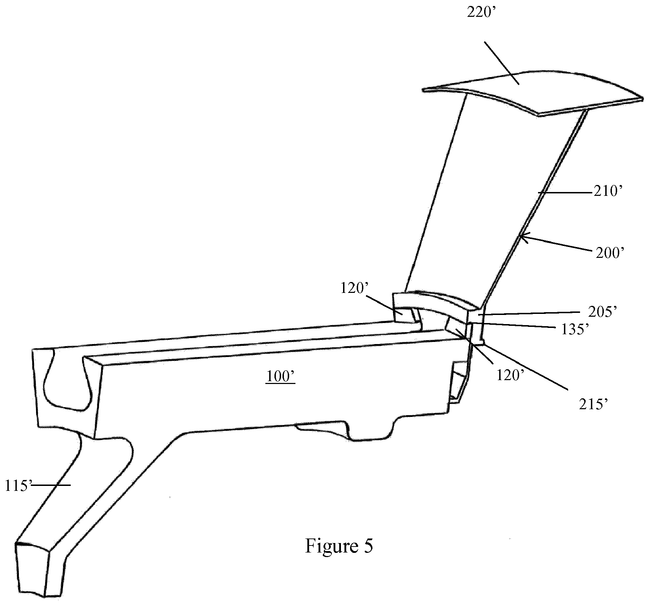

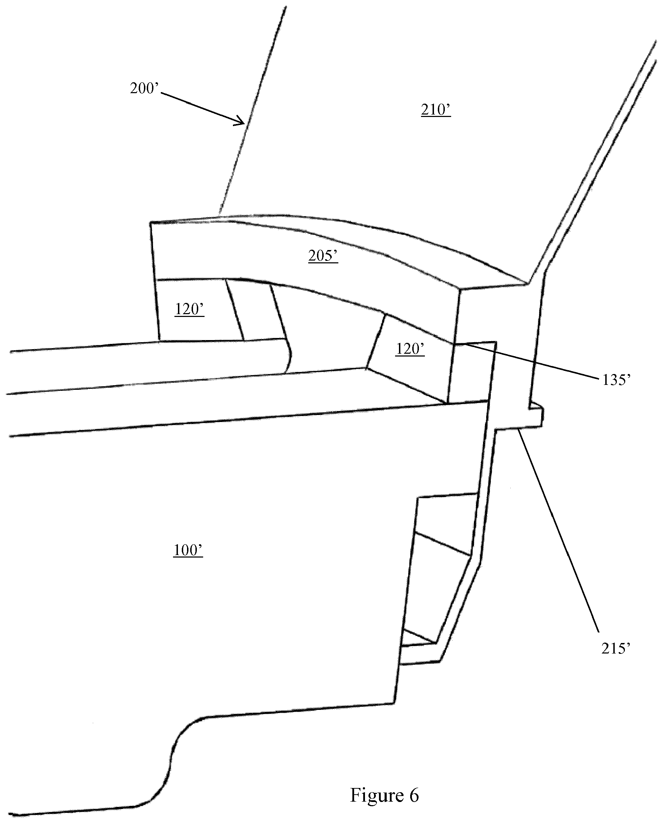

Referring to Figures 5 and 6, there is shown an example of a windage shield 200' in accordance with an embodiment of the disclosure mounted on a fan disc 100'. The fan disc 100' is connected to a forward facing drive arm 115'. Fan discs connected to a forward facing drive arm can have a tendency to roll forwards (i.e., towards the front of the gas turbine engine in which the fan disc is used) due to gas loads on the fan blades in combination with centrifugal loading during rotation of the fan disc. The result of these interacting loads is greater radial displacements and steady state stresses at the rear of the fan disc.

The windage shield 200' comprises a fan disc contacting portion 215', a shield portion 210' and a lid 220'. The windage shield 200' is mounted on the fan disc 100' via the disc posts 120'. The fan disc contacting portion 215' of the windage shield 200' is connected to the disc posts 120'. Any suitable joining technique or fasteners may be used to connect the fan disc contacting portion 215' to the disc posts 120'. The shield portion 210' extends radially outwardly from the fan disc contacting portion 215' and axially rearwardly from the fan disc contacting portion 215'. The shield portion 210' extends between the fan disc contacting portion 215' and the lid 220'.

The fan disc contacting portion 215' is adapted to contact and structurally support a rear portion of the fan disc 100'. The fan disc contacting portion 215' comprises a stiffening element 205' protruding from an axially forward face of the fan disc contacting portion 215'. The stiffening element 205' may extend or protrude a distance axially to provide a required or desired magnitude of structural support to the rear portion of the fan disc 100'. The stiffening element 205' is located outboard (i.e., radially outward) of the disc posts 120'. The stiffening element 205' may extend a distance radially to provide a required or desired magnitude of structural support to the rear portion of the fan disc 100'. The stiffening element 205' is located on (i.e., is in contact with) an upper surface 135' of at least one of the disc posts 120'. The stiffening element 205' extends or spans (e.g., in a circumferential direction or arc) a distance across the axially forward face of the fan disc contacting portion 215'. For example, the stiffening element 205' may extend or span at least the distance between upper surfaces 135' of adjacent disc posts 120' (as shown in Figure 5), such that a lower surface of the stiffening element 205' is in contact with at least a portion of the upper surface 135' of each of the adjacent disc posts 120'.). The stiffening element 205' may extend in a circumferential direction across the axially forward face of the fan disc contacting portion 215' to form an annular stiffening element 205', e.g. such that a lower surface of the stiffening element 205' is in contact with at least a portion of the upper surface 135' of each disc post 120' on the fan disc 100'.

The stiffening element 205' locally increases the hoop stiffness of the windage shield 200'. The windage shield 200' is configured to reduce peak stresses and radial growth experienced by the rear of the fan disc 100'. The stiffening element 205' may shield the rear of the fan disc 100' from at least some of the loads typically experienced by the rear of the fan disc 100' during use by carrying at least a portion of those loads. Similarly, by locally increasing the hoop stiffness of the windage shield 200', the windage shield 200' may help to reduce radial displacements experienced by the rear of the fan disc 100'.

The stiffening element 205' may be integral to the fan disc contacting portion 215'. The stiffening element 205' may comprise, or consist essentially of, the same material or materials as one or more other portions of the windage shield 200', e.g. the fan disc contacting portion 215', the shield portion 210' and/or the lid 220'.

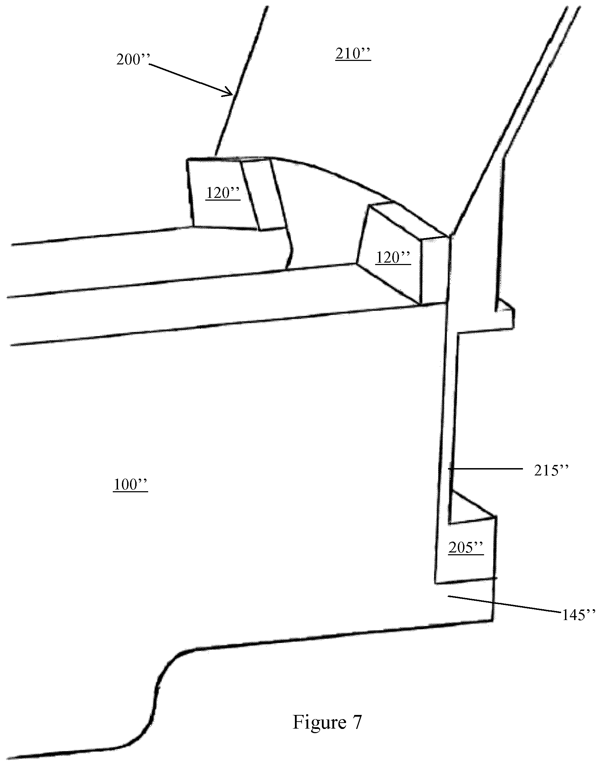

Figure 7 shows an example of a windage shield 200" in accordance with another embodiment of the disclosure mounted on a fan disc 100". The fan disc 100" comprises disc posts 120". The fan disc 100" further comprises a protrusion or flange 145" extending axially rearward from the fan disc 100". The protrusion 145" is located radially inward of an axially rearward-facing outer surface of the fan disc 100". The protrusion or flange 145" may be an arc-shaped or annular protrusion extending in a circumferential direction across a rear surface of the fan disc 100".

The windage shield 200" comprises a fan disc contacting portion 215", a shield portion 210" and a lid (not shown). The windage shield 200" is mounted on the fan disc 100" via the disc posts 120". The fan disc contacting portion 215" of the windage shield 200" is connected to the disc posts 120". Any suitable joining technique or fasteners may be used to connect the fan disc contacting portion 215" to the disc posts 120". The shield portion 210" extends radially outwardly from the fan disc contacting portion 215" and axially rearwardly from the fan disc contacting portion 215". The shield portion 210" extends between the fan disc contacting portion 215" and the lid (not shown).

The fan disc contacting portion 215" is adapted to contact and structurally support a rear portion of the fan disc 100". The fan disc contacting portion 215" comprises a stiffening element 205" protruding from an axially rearward face of the fan disc contacting portion 215". The stiffening element 205" may extend or protrude a distance axially to provide a required or desired magnitude of structural support to the rear portion of the fan disc 100". The stiffening element 205" is located inboard (i.e., radially inward) of the disc posts 120". The stiffening element 205" may extend a distance radially to provide a required or desired magnitude of structural support to the rear portion of the fan disc 100". The stiffening element 205" is located on (i.e., is in contact with) at least a portion of an upper surface of the protrusion or flange 145". The stiffening element 205" extends or spans (e.g., in a circumferential direction or arc) a distance across at least a portion of the axially rearward face of the fan disc contacting portion 215". The stiffening element 205" may extend in a circumferential direction across the axially rearward face of the fan disc contacting portion 215" to form an arc-shaped or annular stiffening element 205", e.g. such that a lower or inner surface of the stiffening element 205" is in contact with at least a portion of an upper or outer surface of the protrusion or flange 145".

The stiffening element 205" locally increases the hoop stiffness of the windage shield 200". The windage shield 200" is configured to reduce peak stresses and radial growth experienced by the rear of the fan disc 100". The stiffening element 205" may shield the rear of the fan disc 100" from at least some of the loads typically experienced by the rear of the fan disc 100" during use by carrying at least a portion of those loads. Similarly, by locally increasing the hoop stiffness of the windage shield 200", the windage shield 200" may help to reduce radial displacements experienced by the rear of the fan disc 100".

The stiffening element 205" may be integral to the fan disc contacting portion 215". The stiffening element 205" may comprise, or consist essentially of, the same material or materials as one or more other portions of the windage shield 200", e.g. the fan disc contacting portion 215", the shield portion 210" and/or the lid.

In embodiments, the fan disc contacting portion may comprise any number or arrangement of stiffening elements to locally increase the hoop stiffness of the windage shield.

One or more of the stiffening elements may be integral to the fan disc contacting portion. One or more of the stiffening elements may be joined or fastened to the fan disc contacting portion. Any suitable joining or fastening means or technique may be employed. One or more of the stiffening elements may be permanently, semi-permanently or releasably joined or fastened to the fan disc contacting portion.

One or more of the stiffening elements may be provided as an insert receivable at least partially in or on the fan disc contacting portion. The fan disc contacting portion may comprise one or more recesses for receiving, partially or fully, one or more of the stiffening elements.

The stiffening element(s) may comprise, or consist essentially of, the same material or materials as one or more other portions of the windage shield. Alternatively, the stiffening element(s) may comprise, or consist essentially of, a different material or materials from other portions of the windage shield. The stiffening element(s) may comprise, or consist essentially of, a metal or an alloy, for example titanium, aluminium, a titanium alloy or an aluminium alloy. The stiffening element(s) may comprise, or consist essentially of, a composite material, for example a metal matrix composite material.

The stiffening elements may be located at a plurality of locations on the fan disc contacting portion to locally increase the hoop stiffness of the windage shield and provide structural support to the rear of the fan disc at the plurality of locations. For example, a windage shield may be provided with a stiffening element in the location as shown in the embodiment of Figures 5 and 6 and may also be provided with a stiffening element in the location shown in the embodiment of Figure 7.

The windage shield may be mounted to the fan disc in any suitable manner. For example, the windage shield may be mounted to the fan disc by a fastener (e.g., a nut and a bolt, a screw), and/or an adhesive. The windage shield may be mounted to the fan disc via a weld.

A windage shield according to the present disclosure may be effective for fan discs with a forward facing drive arm, for the reasons discussed above.

Ordinarily, a windage shield is provided on the rear of a fan disc to reduce or eliminate the effects of windage on engine efficiency. A windage shield according to the present disclosure may perform two roles. The first role is to reduce or eliminate the effects of windage on engine efficiency. The second role is to provide improved load shielding to the rear of the fan disc, e.g. to protect the rear of the fan disc from the greater radial displacements and steady state stresses typically associated with a fan disc connected to a forward facing drive arm. In this way, a proportion of the loads may be borne by the windage shield, rather than by the rear of the fan disc.

A windage shield in accordance with an embodiment of the disclosure may be effective for fans with a hub to tip ratio of between 0.4 and 0.25, and/or for fans with a fan diameter of greater than 90 inches (2.3 metres).

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A windage shield (200', 200") for mounting on a fan disc (100', 100") of a fan (23) of a gas turbine engine (10), the windage shield (200', 200") comprising: a fan disc contacting portion (215', 215") adapted to contact and structurally support a rear portion of the fan disc (100', 100"); wherein the fan disc contacting portion (215', 215") includes one or more stiffening elements (205', 205") to locally increase the hoop stiffness of the windage shield (200', 200").

2. A windage shield (200', 200") according to claim 1, wherein at least one of the one or more stiffening elements (205', 205") is integral to the fan disc contacting portion (215, 215").

3. A windage shield (200', 200") according to claim 1 or claim 2, wherein at least one of the one or more stiffening elements (205', 205") is provided as an insert receivable partially or fully on or in the fan disc contacting portion (215, 215").

4. A windage shield (200', 200") according to claim 1, claim 2 or claim 3, wherein at least one of the one or more stiffening elements (205', 205") comprises, or consists essentially of, a composite material such as a metal matrix composite or a ceramic matrix composite.

5. A windage shield (200', 200") according to any one of claims 1 to 4, wherein at least one of the one or more stiffening elements (205', 205") comprises, or consists essentially of, a metal or alloy such as nickel alloy, titanium, a titanium alloy, aluminium or an aluminium alloy.

6. A fan (23) for a gas turbine engine (10), the fan (23) comprising:
a fan disc (100'); and
at least one windage shield (200', 200") according to any one of claims 1 to 5 mounted on the fan disc (100').

7. A fan (23) according to claim 6, wherein the windage shield (200', 200") is mounted on a rear portion of the fan disc (100').

8. A fan (23) according to claim 7, the fan disc (100') further comprising disc posts (120') for locating a blade mounted on the fan disc (100'), wherein at least one of the one or more stiffening elements (205') is located on the disc posts (120') radially outwardly of the disc posts (120').

9. A fan (23) according to claim 7 or claim 8, the fan disc (100') comprising a protrusion (145") extending axially rearwardly, wherein at least one of the one or more stiffening elements (205") is disposed on and/or adjacent the protrusion (145").

10. A gas turbine engine (10) for an aircraft comprising:
an engine core (11) comprising a turbine (19), a compressor (14), and a core shaft (26) connecting the turbine (19) to the compressor (14); and
a fan (23) as claimed in any one of claims 6 to 9 located upstream of the engine core (11).

11. A gas turbine engine (10) according to claim 10, further comprising a gearbox (30) that receives an input from the core shaft (26) and outputs drive to the fan (23) so as to drive the fan (23) at a lower rotational speed than the core shaft (26).
